# EUROPÄISCHE PATENTSCHRIFT

(11) **EP 2 524 119 B1**
(45) Veröffentlichungstag und Bekanntmachung des Hinweises auf die Patenterteilung: **06.01.2016**
(21) Anmeldenummer: 11700525.6
(22) Anmeldetag: 08.01.2011
(51) Int. Cl.: F01N 3/20

(54) **VORRICHTUNG MIT EINEM TANK UND EINER FÖRDEREINHEIT FÜR REDUKTIONSMITTEL**
DEVICE HAVING A TANK AND A DELIVERY UNIT FOR REDUCTANTS
DISPOSITIF MUNI D'UN RESERVOIR ET D'UNE UNITE DE TRANSPORT POUR AGENT DE REDUCTION

(30) Priorität: 13.01.2010 DE 102010004612
(43) Veröffentlichungstag der Anmeldung: 21.11.2012
(73) Patentinhaber: Continental Automotive GmbH, 30165 Hannover (DE)
(72) Erfinder: MAUS, Wolfgang, 51429 Bergisch Gladbach (DE); WIERES, Ludwig, 51491 Overath (DE); HODGSON, Jan, 53840 Troisdorf (DE); BRÜCK, Rolf, 51429 Bergisch Gladbach (DE)
(86) Internationale Anmeldenummer: PCT/EP2011/050194
(87) Internationale Veröffentlichungsnummer: WO 2011/086039

(56) Entgegenhaltungen:
- EP-A1- 1 925 354
- EP-A2- 1 043 495
- EP-A2- 2 161 422
- EP-A2- 2 199 556
- DE-A1-102006 017 471
- DE-A1-102007 047 885
- DE-C1- 19 856 366

## Beschreibung

Die vorliegende Erfindung betrifft eine Vorrichtung, welche einen Tank mit einem Tankboden und eine Fördereinheit für eine Flüssigkeit hat, wobei die Flüssigkeit insbesondere ein flüssiges Reduktionsmittel zur Abgasnachbehandlung ist.

Zur Entfernung von Stickoxiden (NOₓ) im Abgasstrom von Verbrennungskraftmaschinen wird bevorzugt ein flüssiges Reduktionsmittel in den Abgasstrom eingespritzt, um die im Abgasstrom enthaltenen Stickoxide mittels eines Katalysators in elementaren Stickstoff (N₂) und Wasser (H₂O) umzuwandeln. Als flüssiges Reduktionsmittel wird bevorzugt eine aktive Substanz, beispielsweise Ammoniak (NH₃) und/oder Harnstoff (CH₄N₂O), in Wasser gelöst und hinzugegeben. Zur Bevorratung des flüssigen Reduktionsmittels ist ein Tank vorgesehen, der mit einer Fördereinheit zusammenwirkt, so dass eine Förderung des Reduktionsmittels aus dem Tank hin zum Abgasstrom ermöglicht ist.

Bei der Förderung bzw. der Bevorratung dieses Reduktionsmittels sind eine Reihe technischer Probleme gegeben, um unter allen Betriebsbedingungen eine vorgegebene Menge des Reduktionsmittels hin zum Abgasstrom zuzugeben. Diese Probleme sind insbesondere darin begründet, dass das flüssige Reduktionsmittel, insbesondere wässrige Harnstofflösung, einfrieren kann. Um das Einfrieren des flüssigen Reduktionsmittels zu verhindern, kann beispielsweise Anti-Fröstschutzmittel hinzugesetzt werden, so dass der Gefrierpunkt von wässriger Harnstofflösung, der üblicherweise bei ca. -11 °C liegt, auf bis zu -40 °C erniedrigt wird.

Selbst bei Einsatz eines solchen Anti-Frostschutzmittels bzw. Gefrierpunkterniedrigers muss gleichwohl sichergestellt werden, dass die Stickoxide im Abgasstrom auch bei sehr tiefen Temperaturen in der Umgebung des Kraftfahrzeuges reduziert werden. Zu diesem Zweck ist es gegebenenfalls erforderlich, das Reduktionsmittel zunächst aufzutauen bzw. abzuschmelzen. Hierfür wurden bereits diverse Lösungen zum Beheizen des Tanks und/oder einem Teilvolumen des Tanks vorgeschlagen. Diese Lösungen sind jedoch teilweise nicht geeignet, wiederholtes Antauen und Zufrieren in der Weise durchzuführen, dass sicher flüssiges Reduktionsmittel zum Abgasstrom hinzugegeben werden kann.

Besondere Schwierigkeiten ergeben sich dann, wenn eine Entnahme des flüssigen Reduktionsmittels nahe des Tankbodens und durch den Tankboden hindurch erfolgt. Für diesen Fall wurde beispielsweise herausgefunden, dass das gefrorene Reduktionsmittel mittels einer Heizung am Tankboden zwar aufgetaut werden kann, dass darüber liegende Bereiche der gefrorenen Flüssigkeit jedoch nicht erreicht werden können und somit eine dicke Eishülle um die Entnahmestelle bestehen bleibt. Das Absaugen des verflüssigten Reduktionsmittels führt jedoch zu einem Vakuum, gegen das die hier üblicherweise eingesetzten Pumpen nicht arbeiten können.

In der Europäischen Patentanmeldung EP-A1-1 925 354 ist eine katalytische betrifft eine Reduktionsmittel-Fördereinrichtung, die teilweise in und/oder unmittelbar an einem Reduktionsmitteltank angeordnet ist. Die Reduktionsmittel-Fördereinrichtung ist von einer Heizung umgeben. Diese Heizung ist eine Heizwendel oder eine Heizspirale, die einen Eisschutzkäfig bildet. Diese Heizwendel bzw. Heizspirale ist bevorzugt eine Kühlwasserheizung und beheizt sowohl einen Reduktionsmitteltank als auch die Reduktionsmittel-Fördereinrichtung. Die mit dieser Heizung mögliche Aufheizung ist allerdings teilweise nicht ausreichend zielgerichtet, wenn Reduktionsmittel in einem Tank wiederholt angetaut und zugefroren und/oder eine dicke Eishülle um eine Entnahmestelle für das Reduktionsmittel gebildet ist.

Hiervon ausgehend ist es Aufgabe der vorliegenden Erfindung, die mit Bezug auf den Stand der Technik geschilderten Probleme zumindest teilweise zu lösen.

Insbesondere soll die Aufgabe gelöst werden, eine Heizstrategie bzw. ein Wärmemanagement anzugeben, mit der eine gezielte und ausreichende Auftauung von gefrorenem Reduktionsmittel bereits kurz nach dem Start erreicht wird. Dabei soll insbesondere eine konzentrierte Wärmeeinbringung angestrebt werden, ohne dass hierbei lokale Heißstellen erzeugt werden, die eine Oberflächentemperatur von höher als 90 °C erreichen. Darüber hinaus sollen gegebenenfalls Sicherungsmaßnahmen vorgeschlagen werden, die die Funktionalität bzw. die Heizstrategie gezielt beeinflussen.

Als weitere Aufgabe ist anzuführen, dass Maßnahmen angegeben werden sollen, die gerade beim Auftau-Vorgang bzw. kurz nach dem Auftau-Vorgang eine einwandfreie Entnahme von flüssigem Reduktionsmittel ermöglicht, so dass insbesondere eine im Wesentlichen blasenfreie Förderung ermöglicht ist.

Darüber hinaus ist ein Ziel dieser Erfindung, das Wärmemanagement nahe der Entnahmestelle sowie die einwandfreie Entnahme von flüssigem Reduktionsmittel durch eine geeignete Rückführleitung von bereits gefördertem Reduktionsmittel hin zum Tank zu verbessern.

Eine weitere Aufgabe der Erfindung ist es, Maßnahmen vorzuschlagen, mit denen genauere Erkenntnisse über den Auftau-Grad bzw. den Füllstand an flüssigem Reduktionsmittel während des Auftau-Vorgangs bzw. kurz nach dem Auftau-Vorgang vorliegen.

Eine weitere Aufgabe besteht darin, Maßnahmen anzugeben, mit denen bereits der Einfrierprozess gezielt abläuft, so dass eine geringere Belastung auf die Komponenten des Tanks bzw. den Tank selber einwirkt und/oder das Auftauen anschließend begünstigt wird.

Zudem soll erreicht werden, dass eine energetisch günstige Heizung des Tanks erfolgt, so dass seitens eines Kraftfahrzeugs nur möglichst geringe Energie zur Verfügung gestellt werden muss.

Als weitere Teilaufgabe wird angesehen, die Vorrichtung so zu gestalten, dass sie einfach für Inspektionsmaßnahmen und/oder Wartungsmaßnahmen handhabbar ist. Insbesondere soll auch eine Inspektion und/oder Wartung der Fördereinheit bei nicht vollständig geleertem Tank möglich sein.

Weiterhin sollen auch Maßnahmen angegeben werden, mit denen eine Vakuum-Bildung bei einer Heizung bei Entnahme des Reduktionsmittels vermieden werden. Dabei soll nach Möglichkeit ein geringer technischer Aufwand betrieben werden.

Zur Lösung wenigstens einer der vorstehenden Aufgaben wird eine Vorrichtung gemäß den Merkmalen des Patentanspruchs 1 vorgeschlagen. Vorteilhafte Weiterbildungen, die sich gegebenenfalls auf weitere Aufgaben der Erfindung beziehen, sind in den abhängig formulierten Patentensprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Demnach wird hier eine Vorrichtung, umfassend zumindest einen Tank mit einem Tankboden und eine Fördereinheit für eine Flüssigkeit vorgeschlagen, wobei die Fördereinheit in einer Kammer am Tankboden angeordnet ist, und die Kammer zumindest eine Heizung aufweist, wobei die Heizung mit mindestens einem elektrischen Heizsegment (33) ausgeführt ist, das in wärmeleitenden Kontakt zumindest zur Kammerseitenwand oder zur Kammeroberseite angeordnet ist und mehrere Heizsegmente in Richtung einer Kammerhöhe der Kammer vorgesehen sind.

Der Tank kann grundsätzlich mit Metall und/oder mit Kunststoff ausgeführt sein. Regelmäßig weist der Tank eine komplexe Geometrie auf, weil er sich den Gegebenheiten bzw. den räumlichen Bedingungen im Kraftfahrzeug anpasst. Der Tank kann einstückig hergestellt sein, dies ist aber nicht zwingend erforderlich. Regelmäßig können dem Tank ein Tankboden, eine bzw. mehrere Tankseiten und eine Tankdecke zugeordnet werden, die zusammen den Tankinnenraum bzw. das Tankvolumen definieren. Selbstverständlich ist auch möglich, dass der Tank in mehrere Teil-Volumina unterteilt ist, so dass in den unterschiedlichen Teil-Volumina (verschiedene) Mengen an Flüssigkeit bevorratet werden.

Die Vorrichtung hat zudem zumindest eine Fördereinheit, wobei regelmäßig genau eine (einzelne) Fördereinheit vorgesehen sein wird. Die Fördereinheit umfasst dabei Komponenten, mit denen die Flüssigkeit aus dem Tank herausgefördert werden kann (passive Komponenten wie z. B. flüssigkeitsführende Leitungen und aktive Komponenten wie z. B. Apparate zur Behandlung, Umwandlung, Erwärmung, etc. der Flüssigkeit). Diesbezüglich umfasst die Fördereinheit bevorzugt zumindest eine Pumpe und entsprechende Förderleitungen für die Flüssigkeit. Gegebenenfalls ist möglich, dass die Fördereinheit noch weitere Komponenten aufweist, wie beispielsweise mindestens einen Filter, mindestens einen Sensor und/oder mindestens ein Ventil. Auch können in der Fördereinheit elektronische bzw. elektrische Komponenten integriert sein, wie beispielsweise Schaltungen, Speicher, Rechner oder dergleichen.

Unter einer "Flüssigkeit" wird insbesondere eine Substanz verstanden, die zumindest bei Raumtemperatur einen flüssigen Aggregatszustand hat. Ganz besonders bevorzugt ist die Flüssigkeit ein Reduktionsmittel zur Behandlung von Stickoxiden, wie sie im Abgas von Verbrennungskraftmaschinen auftreten. Unter einem flüssigen Reduktionsmittel wird beispielsweise neben Ammoniak auch ein Ammoniakvorläufer verstanden, wie beispielsweise Harnstoff. Das flüssige Reduktionsmittel kann zusätzlich wenigstens eine gefrierpunktserniedrigende Substanz aufweisen, ebenso wie kleine, die Förderung nicht behindernde, Partikel. Insofern ist mit "Flüssigkeit" ein Oberbegriff insbesondere für genau diese Reduktionsmittelarten angegeben.

Die Fördereinheit der erfindungsgemäßen Vorrichtung ist dabei in einer Kammer am Tankboden angeordnet. Die Kammer stellt insbesondere eine nach innen gerichtete Einwölbung, Einbuchtung, Rücksprung oder dergleichen vom benachbarten Tankboden dar. Damit bildet die Kammer, ausgehend vom Tankboden, eine Kammerhöhe aus. Die Kammer ist frei von der Flüssigkeit, die im Tank bevorratet wird, und nimmt zumindest teilweise die Fördereinheit auf. Die Kammer kann alternativ auch zumindest teilweise ebenfalls mit der im Tank bevorrateten Flüssigkeit gefüllt, bzw. geflutet sein. So kann das Verdrängungsvolumen der Kammer in dem Tank verkleinert werden. Die Kammer kann ein integrales oder separates Anschluss-Teil des Tankbodens sein. Bevorzugt ist weiter, dass die Kammer, vorzugsweise auf Höhe des benachbarten Tankbodens, verschlossen ist. Weiterhin ist bevorzugt, dass die Kammer außermittig bezogen auf den Tank, also nahe einer Tankseite, angeordnet ist.

Die Kammer erstreckt sich zwar bevorzugt aus dem Tankboden, es ist aber auch möglich, dass die Kammer an einer Seitenwand des Tankes angeordnet ist und sich von der Seitenwand des Tanks aus erstreckt. Dabei ist es allerdings bevorzugt, dass die Kammer in der Nähe des Tankbodens angeordnet ist. Hiermit wird insbesondere eine Position vorgeschlagen, die sich näher am Tankboden als an der Tankoberseite befindet. Die Abstände der Kammer zu einer Tankoberseite und zu einer Tankoberseite können beispielsweise über einen gedachten Mittelpunkt der Kammer und dessen Abstand zu einer gedachten Ebene der Tankoberseite sowie dem Abstand zu einer gedachten Ebene des Tankbodens bestimmt werden. Eine gedachte Ebene einer Tankoberseite oder eines Tankbodens gibt im Wesentlichen die Lage bzw. Position der Tankoberseite bzw. des Tankbodens wieder. Ausstülpungen oder Ausnehmungen in dem Tankboden oder der Tankoberseite müssen hierbei nicht berücksichtigt sein. Vorzugsweise ist der Abstand eines solchen gedachten Mittelpunktes zur Ebene der Tankoberseite sogar mehr als doppelt so groß und besonders bevorzugt mehr als fünf mal so groß wie der Abstand des Mittelpunktes zur Ebene des Tankbodens.

Weiter ist hier vorgesehen, dass die Kammer zumindest eine Heizung aufweist. Ganz besonders bevorzugt ist dabei, dass die Heizung mit elektrischer Energie betrieben wird. Die Heizung kann grundsätzlich separat ausgeführt sein, Teil der Fördereinheit sein und/oder in bzw. auf einer Kammerwand angeordnet sein.

Die hier vorgeschlagene Anordnung hat eine Reihe von Vorteilen. Die in den Tank hineinragende Kammer erlaubt eine platzsparende Anordnung der Fördereinheit. Die Bodennähe der Fördereinheit erlaubt auch eine vollständige Leerung des Tanks bezüglich der Flüssigkeit unabhängig von der Bauform des Tanks, beispielsweise im Vergleich zu Tanks, bei denen die Flüssigkeit über eine an der Tankdecke angeordnete Fördereinheit entnommen wird. Außerdem erlaubt die in den Tank hineinragende Kammer mit ihrer Heizung, dass die Wärme beim Auftauen tiefer bzw. weiter in das Innere in das Eis hineingebracht wird. Auch wird so lokal die beheizte Oberfläche vergrößert. Die bevorzugte Kontur der Kammer mit relativ steilen (praktisch fast senkrecht zum Tankboden verlaufenden). Kammerseitenwänden führt auch dazu, dass eine gerichtete Strömung von aufgetautem Reduktionsmittel hin zu einem vorgegebenen Bereich des Tankbodens erfolgt, so dass hier schnell eine große Menge der Flüssigkeit aufgetaut und zu einer Entnahmestelle transportiert werden kann.

Die Heizung ist darüber hinaus mit mindestens einem elektrischen Heizsegment ausgeführt ist, das in Wärme leitenden Kontakt zumindest zur Kammerseitenwand oder zur Kammeroberseite angeordnet ist. Ganz besonders bevorzugt ist, dass jeweils mindestens ein elektrisches Heizelement an bzw. in einer Kammerseitenwand und mindestens ein elektrisches Heizelement an bzw. in der Kammeroberseite angeordnet sind. Als elektrisches Heizelement kommt bevorzugt eine elektrische Heizleitung in Betracht, wie beispielsweise ein Heizdraht, eine Heizfolie oder dergleichen. Die Heizung kann auch zumindest ein Heizelement mit einem Heizwiderstand mit positivem Temperaturkoeffizienten aufweisen. Bei einem solchen Heizelement spricht man auch von einem PTC-Heizelement (PTC = positive temperature coefficient). Die Heizung kann an der Kammerwand aufgedruckt und/oder aufgeklebt sein, insbesondere von der Innenseite der Kammer her. Auch ist möglich, dass die Heizung mit einer Art Klammer an der Kammerwand befestigt wird. Beispielsweise kann eine Heizung mittels einer Klammer gegen die Außenseite und/oder die Innenseite der Kammerwand gepresst werden. Für den Betrieb der elektrischen Heizsegmente der Heizung ist eine entsprechende Stromquelle vorgesehen, die insbesondere gezielt regelbar ist.

Außerdem sind mehrere Heizsegmente in Richtung einer Kammerhöhe der Kammer vorgesehen. Das heißt mit anderen Worten, dass ausgehend vom Tankboden hin zur Kammeroberseite mehrere, insbesondere um die Kammer herum verlaufende, bevorzugt parallel zueinander angeordnete, Heizsegmente vorgesehen sind. Diese Heizsegmente können insbesondere unabhängig voneinander betrieben bzw. geregelt werden. Zudem ist auch möglich, dass diese Heizsegmente unterschiedlich ausgeführt sind, insbesondere bezüglich der einzelnen Heizleistungen. Hierbei ist ganz besonders bevorzugt, dass die potentielle Heizleitung der Heizsegmente in Richtung der Kammerhöhe von unten nach oben abnimmt. Das heißt mit anderen Worten auch, dass ein Heizsegment, das nahe dem Tankboden angeordnet ist, eine größere Wärmeeinbringung in das Tankinneren ermöglicht, als ein Heizsegment, das näher an der Kammeroberseite angeordnet ist.

Gemäß einer Weiterbildung der Erfindung wird vorgeschlagen, dass eine Isolierung zumindest im Bereich einer Kammeroberseite der Kammer vorgesehen ist. Ganz besonders bevorzugt ist hierbei, dass die thermische Isolierung zwischen einer Kammerwand mit einer Heizung und dem Kammerinnenraum mit der Fördereinheit positioniert ist. Gegebenenfalls kann der Gesamtbereich benachbart zu einer Heizung hin zum Inneren der Kammer bzw. der Fördereinheit mit einer oder mehreren thermischen Isolierungen ausgeführt sein. Ganz besonders bevorzugt ist zudem, dass die Kammer keine Isolierung gegenüberliegend zur Kammeroberseite hin zur Umgebung aufweist. Hiermit soll insbesondere erreicht werden, dass die Wärme, die durch die zumindest eine Heizung bereitgestellt wird, direkt der Flüssigkeit im Tank benachbart zur Kammer zugeleitet wird und nicht bzw. deutlich reduziert dem Inneren der Kammer bzw. der Fördereinheit. Darüber hinaus kann so erreicht werden, dass bei einer äußeren Kälteeinwirkung zunächst die Fördereinheit einfriert, nicht aber die Flüssigkeit in unmittelbarer Nachbarschaft zur thermisch isolierten Kammerwand. Hierdurch ist ein sicherer Betrieb der Vorrichtung auch bei einer langzeitigen Kälteeinwirkung an der Entnahmestelle sichergestellt, ebenso wie ein energetisch günstiges und schnelles Auftauen von gefrorener Flüssigkeit im Falle des Einfrierens. Die thermische Isolierung hat insbesondere eine geringere Wärmeleitung als Metall oder Kunststoff. Bevorzugt umfasst die thermische Isolierung zumindest Keramik oder einen offenporigen Schaum.

Gemäß einer Weiterbildung wird auch vorgeschlagen, dass die Heizung zumindest ein selbstregulierendes Heizsegment umfasst. Hiermit ist insbesondere gemeint, dass (automatisch) überwacht bzw. geregelt wird, und dass eine vorgegebene Temperatur im Kontaktbereich mit der Kammer hin zur Flüssigkeit nicht überschritten wird. Dabei kann die Heizleistung so ausgelegt werden, dass bei einer Temperatur der Flüssigkeit von ca. 0 °C eine maximale Oberflächentemperatur der Kammerwand (z. B. 90 C oder sogar nur 70 °C) auch in Bereichen, wo während des Auftauprozesses beispielsweise kein signifikanter Flüssigkeitsanteil vorliegt, nicht überschritten wird. Hierfür kann beispielsweise ein Heizmaterial eingesetzt werden, das eine temperaturabhängige (elektrische) Widerstandsänderung erfährt und somit die Heizleistung selbst infolge der Widerstandsänderung reguliert. Ein PTC-Heizelement ist in diesem Sinne selbstregelnd. Eine weitere Möglichkeit, ein selbstregelndes Heizelement auszubilden, bietet ein Bi-Metall-Schalter. Ein Bi-Metallschalter ist aus zwei verschiedenen Materialien mit unterschiedlichen thermischen Ausdehnungskoeffizienten gebildet. Ein Bi-Metall-Schalter kann so ausgebildet sein, dass er eine elektrische Verbindung trennt, sobald eine Temperatur oberhalb einer Schwelltemperatur liegt. In der Heizung kann ein solcher Bi-Metall-Schalter vorgesehen sein, um die Heizung selbstständig auf eine vorgegebene Heiztemperatur zu regeln. Auch kann für ein selbstregelndes Heizelement innerhalb des Heizelementes eine eigenständige Regeleinheit, bestehend aus einem Temperatursensor, einem Regler und einem regelbaren Widerstand, vorgesehen sein.

Gegebenenfalls können auch zusätzliche Schalter, insbesondere so genannte Thermoschalter, vorgesehen sein, um für die einzelnen Heizsegmente eine Zwei-Punkt-Regelung auszuführen.

Entsprechend einem weiteren Aspekt der Erfindung wird auch vorgeschlagen, dass die zumindest eine Heizung als Füllstandsmesser eingerichtet ist. Das gilt insbesondere für den Fall, dass die Heizung mit Heizmaterial ausgeführt ist, das einen temperaturabhängigen elektrischen Widerstand aufweist. Infolge des Kontakts der Heizung mit der Umgebung hin zum Tank können auf unterschiedlichen Höhen der Kammer unterschiedliche Temperaturen bestimmt und damit gerade für den Auftau-Zeitraum Informationen über den Flüssigkeitsgrad bzw. die Höhe des Flüssigkeitspegels um die Kammer herum gewonnen werden. Dies betrifft insbesondere auch den Zustand, wenn große Teile der Flüssigkeit im Tank noch gefroren sind, beispielsweise auch dort, wo möglicherweise ein Füllstandsmesser für den gesamten Tank bereitgestellt ist. Hier kann insbesondere eine Energiebetrachtung zur Bestimmung des Füllstandes bzw. des Flüssigkeitspegels verwendet werden. Die Energiemenge, die zur Aufwärmung der Füllung des Tanks erforderlich ist, ist zumindest in einem bestimmten Temperaturbereich proportional zu der Füllmenge. Aus der Menge der in den Tank eingebrachten Heizenergie kann daher auf die Füllhöhe im Tank geschlossen werden.

Die spezifische Wärmekapazität der Flüssigkeit im Tank ist regelmäßig auch abhängig von dem Aggregatzustand der Flüssigkeit. Gefrorenes Wasser hat beispielsweise eine spezifische Wärmekapazität von 2,06 kJ/(kg K) [Kilojoule pro Kilogramm und Kelvin]. Flüssiges Wasser hat eine spezifische Wärmekapazität von 4,19 kJ/(kg K) [Kilojoule pro Kilogramm und Kelvin]. Harnstoff-Wasser-Lösung, die häufig als Reduktionsmittel verwendet wird, hat vergleichbare Wärmekapazitäten in den entsprechenden Aggregatzuständen. Zur Aufheizung der gefrorenen Flüssigkeit oder zur Aufheizung der flüssigen Flüssigkeit sind daher unterschiedliche Energiemengen notwendig. Dies kann verwendet werden, um im Rahmen einer Energiebetrachtung den Aggregatzustand der Füllung des Tankes zu bestimmen.

Zur Verbesserung und Überwachung der Energiebetrachtungen können auch Leiterbahnen als zusätzliche Temperatursensoren im Tank und/oder an der Kammer angebracht sein. Die Temperatursignale dieser Temperatursensoren können in einer Energiebetrachtung mit berücksichtigt werden.

Gemäß einer Weiterbildung der Erfindung kann die Heizung auch eine Kühlwasserheizung umfassen. Eine Kühlwasserheizung kann nach Art einer Kühlschlange ausgeführt sein, die von dem Kühlwasser eines Motors durchspült wird. Eine solche Kühlschlange kann an der Kammerwand innerhalb und/oder außerhalb der Kammer vorgesehen sein.

Einem weiteren Aspekt der Erfindung folgend, kann am Tankboden nahe der Kammer mindestens ein Wärmeleitmittel angeordnet sein. Hierbei ist insbesondere gemeint, dass die mit der Kammer generierte Heizleistung über (passive) Wärmeleitmittel in die (benachbarte bzw. angrenzende) Umgebung der Kammer, nämlich in den dort befindlichen Tankboden, eingeleitet wird. Hierfür können separate und/oder integrierte Wärmeleitmittel am bzw. im Tankboden vorgesehen sein. Ein Wärmeleitmittel kann insbesondere ein in den Tankboden eingegossener Metallring sein (z. B. ein so genannter SAE-Connector) und/oder ein (eingegossener) Topf bzw. eine (eingegossene) Hülse, die eine Art Vertiefung bzw. Graben um die Kammer herum ausgebildet bzw. zumindest teilweise begrenzt. Selbstverständlich ist möglich, die Wärmeleitmittel nicht nur hin zum Tankboden auszurichten. Es ist ebenso möglich, die Wärmeleitmittel an der Kammerwand vorzusehen und die von der Heizung generierte Heizleistung (auch) über die Oberfläche der Kammer hin zum Tankinneren zu verteilen. Die Wärmeleitmittel sind bevorzugt mit metallischem Material gebildet.

Bevorzugt ist auch eine Ausgestaltung, bei der das Wärmeleitmittel der Befestigung der Kammer dient.

So kann das Wärmeleitmittel gleichzeitig ein Teil oder die gesamte Kammerbefestigung sein, so dass eine einfache Ausgestaltung der Kammerbefestigung und der Wärmeleitmittel erreicht werden kann.

Noch einem weiteren Aspekt der Erfindung folgend, wird auch eine Vorrichtung vorgeschlagen, bei der ein Ablauf für Flüssigkeit aus dem Tank in die Kammer und ein Rücklauf für Flüssigkeit aus der Kammer in den Tank vorgesehen sind, wobei Ablauf und Rücklauf an verschiedenen Positionen der Kammer angeordnet sind. Ganz besonders ist bevorzugt, dass der Ablauf auf einer geringeren geodätischen Höhe angeordnet ist als der Rücklauf. Ganz besonders wird als vorteilhaft angesehen, dass der Ablauf nahe des Tankbodens angeordnet ist, während der Rücklauf an einer zum Ablauf gegenüberliegenden Kammerseitenwand und/oder, wie ganz besonders bevorzugt, auf der Kammeroberseite angeordnet ist. Mit einer solchen Anordnung von Ablauf und Rücklauf kann sichergestellt werden, dass Luftblasen, die gegebenenfalls über den Rücklauf wieder in den Tank eingeleitet werden, nicht direkt wieder von dem Ablauf angesaugt werden. Darüber hinaus kann so erreicht werden, dass die bereits geförderte und damit in der Regel auch erwärmte Flüssigkeit zu anderen Bereichen des Tanks zugeführt wird, indem während des Auftau-Vorgangs noch Eis zu erwarten ist. Zu diesem Zweck kann der Rücklauf mit einem sich bis nahe zur Kammeroberseite hin erstreckenden Röhrchen, einer Düse oder dergleichen ausgeführt sein. Zudem können an der Kammerwand, insbesondere an der Kammeroberseite, Leitstrukturen ausgebildet sein, mit denen die über den Rücklauf zurückgegebene Flüssigkeit, insbesondere gleichmäßig, gezielt an der Kammerwand entlangläuft und somit schnell und blasenfrei wieder einem Flüssigkeitsreservoir nahe des Ablaufs zugeführt werden kann. Auch wenn hier stets von einem einzelnen Ablauf und Rücklauf jeweils die Rede ist, kann die Anzahl variiert werden, so dass z. B. mehrere Rückläufe vorgesehen sind. Des Weiteren sei darauf hingewiesen, dass ein Absperrmittel auch mehrere Komponenten bzw. Flüssigkeitsleitungen (gemeinsam) betreffen kann.

Es kann allerdings auch vorteilhaft sein, dass der Ablauf und der Rücklauf direkt zusammen liegen. Vorzugsweise ist dann allerdings der Rücklauf oberhalb des Ablaufs angeordnet, damit Luftblasen, die aus dem Rücklauf hinaus gelangen, möglichst nicht in Kontakt zu dem Ablauf treten. Bei einer solchen Ausgestaltung ist eventuell nur eine einzige Öffnung in der Kammerwand zur Durchführung von Ablauf und Rücklauf erforderlich. So kann die Anzahl der notwendigen Dichtungen reduziert werden.

Entsprechend einer besonders bevorzugten Ausgestaltung der vorstehend beschriebenen Vorrichtung wird auch vorgeschlagen, dass zumindest der Ablauf oder der Rücklauf eine Abflusssperre aufweist. Ganz besonders bevorzugt ist, dass sowohl der Ablauf als auch der Rücklauf eine Abflusssperre aufweisen. Eine Abflusssperre kann mit einer elektrischen Stelleinheit (z. B. Ventil, etc.) und/oder einer mechanischen Stelleinheit (Klappe, Feder-System, etc.) ausgeführt sein. Die Abflusssperre ist dabei so ausgebildet, dass bei Aktivierung der Abflusssperre ein Durchtritt von Flüssigkeit durch den Ablauf und/oder Rücklauf unterbunden ist. Dies betrifft insbesondere den Fall, wenn die Fördereinheit aus der Kammer bzw. mit der Kammer vom Tank entfernt wird, beispielsweise zu Inspektionsvorgängen oder zur Wartung. Eine solche Abflusssperre erlaubt demnach, dass die noch im Tank befindliche Flüssigkeit bei bzw. nach der Entnahme der Fördereinheit nicht ausläuft. Ganz besonders bevorzugt ist, dass die Abflusssperre mit wenigstens einer Komponente der Fördereinheit und/oder der Kammerwand zusammenwirkt, so dass im montierten Zustand der Fördereinheit bzw. der Kammer die Abflusssperre automatisch geöffnet ist und bei der Entnahme automatisch schließt.

Einem weiteren Aspekt der Erfindung folgend, wird auch eine Vorrichtung vorgeschlagen, bei der der Tank wenigstens eine lokale Entlüftungsheizung hat, welche sich ausgehend von einem Ablauf für Flüssigkeit ausgehend am Tankboden über zumindest eine Tankseite bis in die Nähe einer Tankdecke erstreckt. Die Entlüftungsheizung ist insbesondere so ausgerichtet bzw. ausgestaltet, dass diese zumindest einen Kanal an der Tankbegrenzung ausbildet, wenn die Flüssigkeit im Tank gefroren ist. Damit führt die Entlüftungsheizung Wärme der gefrorenen Flüssigkeit so zu, dass sich im Wesentlichen ununterbrochen ein fortgesetzter Bereich mit einer lokal konzentrierten Wärmeeinbringung ausbildet. Diese Entlüftungsheizung verläuft dabei ausgehend von dem Ablauf für Flüssigkeit am Tankboden kontinuierlich bis hin zu einer Tankseite entlang des Tankbodens und dann entlang der Tankseiten bis in die Nähe der Tankdecke. Damit ist insbesondere gemeint, dass sich die Entlüftungsheizung über zumindest 50 % der Höhe der Tankseite erstreckt, bevorzugter Weise sogar über mindestens 80 %, und ganz bevorzugt bis hin zur maximalen Füllhöhe der Flüssigkeit in dem Tank. So kann mit der Entlüftungsheizung sicher eine (für ein Gas durchströmbare) Verbindung zwischen dem oberhalb der Flüssigkeit befindlichen Gasvolumen im Tank und dem Ablauf realisiert werden, so dass eine Vakuumbildung im Bereich des Ablaufs bzw. der Kammer gerade verhindert wird. Grundsätzlich ist möglich, dass eine (separate) Entlüftungsheizung konkret zu diesem Zweck vorgesehen ist, es ist aber auch möglich, beispielsweise eine großflächige Heizung des Tanks lokal, also in einem gegenüber der Tankseite kleinen, genau vorgegebenen, abgegrenzten Bereich in besonderem Maße (gezielt bzw. getrennt) zu heizen.

In diesem Zusammenhang wird auch als vorteilhaft angesehen, dass die wenigstens eine lokale Entlüftungsheizung linienförmig in einer Führung des Tanks angeordnet ist. Hierzu ist möglich, dass außen und/oder innen an bzw. in der Tankbegrenzung (Tankboden, Tankseite) eine Nut vorgesehen ist. Diese kann als separates Bauteil an den Tankboden bzw. die Tankseite angebracht sein, eine integrierte, einstückige Ausgestaltung ist jedoch bevorzugt. Ganz besonders bevorzugt ist es, wenn die Führung bereits bei der Herstellung des Tanks mit ausgebildet wird. Für den Fall, dass die Führung hin zum Tankinneren ausgebildet ist, kann sie gegebenenfalls (teilweise) als Begrenzung für den zu bildenden Kanal und/oder als Schutz für umhertreibende Eisstücke dienen. Für den Fall, dass eine Führung außen am Tank vorgesehen ist, kann sie zur Fixierung der Heizung dienen. Die Führung stellt insbesondere eine teilweise Umschließung der Entlüftungsheizung dar.

Darüber hinaus wird als besonders vorteilhaft angesehen, dass die wenigstens eine lokale Entlüftungsheizung zumindest teilweise mit einer beheizten Injektionsleitung gebildet ist, die sich von der Fördereinheit hin zu einem Injektor für die Flüssigkeit erstreckt. Gerade im Anwendungsbereich der Erfindung bei der Reduktion von Stickoxiden in Abgasen mobiler Verbrennungskraftmaschinen wird die Flüssigkeit bzw. das Reduktionsmittel während der Förderung hin zu einem Injektor erwärmt. Zu diesem Zweck werden gegebenenfalls Rohre und/oder Schläuche eingesetzt, die elektrische Heizungen aufweisen. Hier wird nun vorgeschlagen, diese beheizte Injektionsleitung in Wärme leitendem Kontakt mit dem Tank anzuordnen, so dass die dort erzeugte Wärme auch an den Tankboden bzw. die Tankseite abgegeben wird. Gegebenenfalls sind hierzu zumindest teilweise die thermischen Isolierungen der beheizten Injektionsleitung zu entfernen, damit eine Wärmeabgabe auch an die im Tank befindliche Flüssigkeit in signifikantem Umfang ermöglicht ist. Alternativ oder zusätzlich kann die beheizte Injektionsleitung so ausgestaltet sein, dass diese zumindest zwei Teilbereiche aufweist, die sich in ihrem Wärmedurchgangskoeffizienten unterscheiden. Dies kann beispielsweise durch Ausbildung von Teilbereichen mit unterschiedlicher thermischer Isolierung erfolgen. Besonders bevorzugt ist hierbei eine Ausgestaltung, bei der ein erster Teilbereich mit einem ersten Wärmedurchgangskoeffizienten am Tank angeordnet ist, während ein zweiter, nicht am Tank angeordneter Teilbereich einen zweiten Wärmedurchgangskoeffizienten aufweist, der niedriger als der erste Wärmedurchgangskoeffizient ist. Grundsätzlich ist es möglich, dass die beheizte Injektionsleitung im Inneren des Tanks hindurchgeführt wird, bevorzugt ist jedoch eine Ausgestaltung, bei der die beheizte Injektionsleitung in einer außen angeordneten Führung fixiert ist. Im ersteren Fall ist bevorzugt der erste Teilbereich der beheizten Injektionsleitung der Teilbereich, der durch das Innere des Tanks hindurchgeführt wird, während der zweite Teilbereich der beheizten Injektionsleitung der Teilbereich, der außerhalb des Tanks liegt.

Bevorzugt ist eine Ausgestaltung, bei der eine thermische Isolierung ausgebildet ist, die mit einer Abdeckung verbunden ist, mit der die Führung lösbar verschließbar ist.

Dies ermöglicht in vorteilhafter Weise eine Ausgestaltung, bei der der Wärmedurchgang nach außen durch die thermische Isolierung geringer ist als der Wärmedurchgang in den Tank hinein. Durch die lösbare Verschließbarkeit ist die die Führung und die darin aufgenommenen Bauteile leicht für eine Inspektion oder Wartung zugänglich.

Darüber hinaus ist auch möglich, die wenigstens eine lokale Entlüftungsheizung zumindest teilweise mit einer Tankbefestigung hin zu einem Kraftfahrzeug zu bilden. Bei der Fixierung solcher Vorrichtungen an einem Kraftfahrzeug werden z. B. so genannte Spannbänder eingesetzt, die außen abschnittsweise an dem Tank anliegen. Auch solche Spannbänder können mit einer Heizung ausgeführt sein und durch ihre Anlage Wärme in das Innere des Tanks einbringen. Somit können auch diese Bauteile dazu genutzt werden, wenigstens eine solche Entlüftungsheizung mit einer lokalen Wirkung zur gezielten Ausprägung von Kanälen nahe der Tankbegrenzung zu bilden.

Bevorzugtes Anwendungsgebiet der vorliegenden Erfindung ist die Vorrichtung nach Art einer Reduktionsmittel-Bereitstellungsvorrichtung für Kraftfahrzeuge mit einer Verbrennungskraftmaschine, die Abgas in ein Abgassystem abgeben. Die Raduktionsmittel-Bereitstellungsvorrichtung ist dabei in das Kraftfahrzeug integriert, indem der Tank an dem Kraftfahrzeug befestigt ist. Die Reduktionsmittel-Bereitstellungsvorrichtung ist dazu eingerichtet, insbesondere unter Einsatz einer entsprechenden Steuerung, bedarfsgerecht Reduktionsmittel hin zum Abgassystem hinzuzuführen.

Die Erfindung sowie das technische Umfeld werden nachfolgend anhand der Figuren näher erläutert. Es ist darauf hinzuweisen, dass die Figuren besonders bevorzugte Ausführungsvarianten zeigen, auf die die Erfindung jedoch nicht beschränkt ist. In den Figuren sind gleiche Bauteile mit gleichen Bezugszeichen versehen. Die Figuren sind schematisch. Es zeigen:
- Fig. 1:: eine Vorrichtung mit einem Tank und einer Fördereinheit bei einem Kraftfahrzeug,
- Fig. 2:: ein Detail einer Vorrichtung mit einer teilweise isolierten Kammer,
- Fig. 3:: eine Kammer mit mehreren Heizsegmenten,
- Fig. 4:: ein Detail der Vorrichtung mit einer wartungsfreundlichen Anordnung der Komponenten in der Kammer,
- Fig. 5:: eine weitere Ausgestaltung der Vorrichtung mit einer lokalen Entlüftungsheizung,
- Fig. 6:: ein Detail einer Ausprägung einer lokalen Entlüftungsheizung,
- Fig. 7: ein Detail einer Ausgestaltung der Vorrichtung mit einer speziellen Sumpfheizung, und
- Fig. 8: ein Detail einer weiteren Ausgestaltung der Vorrichtung mit einer speziellen Sumpfheizung.

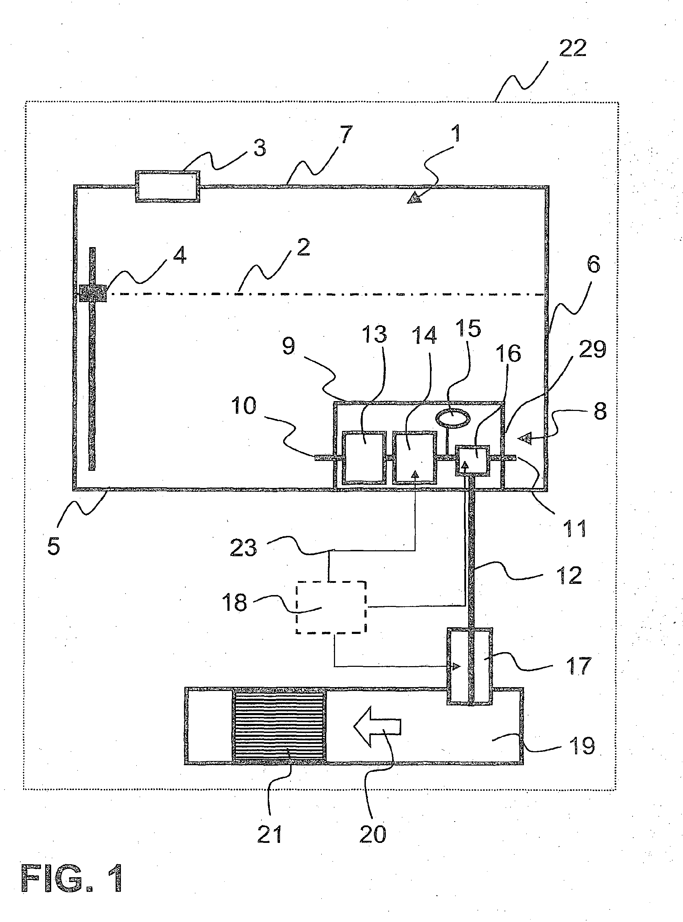

Fig. 1 zeigt schematisch ein Kraftfahrzeug 22 zur Bevorratung einer Flüssigkeit 2, insbesondere zur Bevorratung von flüssigem Reduktionsmittel wie einer wässrigen Harnstofflösung. Der Tank 1 bildet einen Innenraum durch seine Begrenzungswände, die hier mit einer oberen Tankdecke 7, einem unten angeordneten Tänkboden 5 und dazwischen liegenden Tankseiten 6 gebildet sind. Der hier dargestellte Tank 1 weist zudem in der Tankdecke 7 eine Füllöffnung 3 auf, über die der Tank 1 bedarfsgerecht mit Flüssigkeit 2 befüllt werden kann. Üblich ist auch, dass ein solcher Tank 1 einen oder mehrere Füllstandsmesser 4 aufweist, mit der der aktuelle Füllstand der Flüssigkeit 2 im Tank 1 bestimmt werden kann.

Außermittig am Tankboden 5 ist nun eine Kammer 9 ausgebildet, in der eine Fördereinheit 8 angeordnet ist. In der Kammer 9 befindet sich keine Flüssigkeit 2, sondern dort sind die Komponenten zur Förderung der Flüssigkeit 2 aus dem Tank 1 hin zu einem Injektor 17 angeordnet. Die Fördereinheit 8 entnimmt dabei Flüssigkeit 2 über einen Ablauf 10, der ebenfalls in der Nähe des Tankbodens 5 angeordnet ist, aus dem Inneren des Tanks 1. Die Fördereinheit 8 umfasst (in der hier angegebenen Reihenfolge der Durchströmung ausgehend von dem Ablauf 10) zunächst einen Filter 13, dann eine Pumpe 14 und ein Ventil 16, mit denen die Flüssigkeit hin zum Injektor 17 geleitet wird. In dem Leitungsabschnitt zwischen der Pumpe 14 und dem Ventil 16 kann ein Sensor 15 vorgesehen sein, insbesondere ein Drucksensor oder ein Temperatursensor oder eine Kombination aus Druck- und Temperatursensor. Das Ventil 16 ermöglicht alternativ zur Weiterleitung der Flüssigkeit 2 hin zu einem Injektor 17 auch die Förderung hin zu einem Rücklauf 11, über den die Flüssigkeit 2 wieder dem Tank 1 zugeführt wird und folglich aus der Kammer 9 in den Tank wieder austritt.

Für den Betrieb der Pumpe 14, des Ventils 16, des Injektors 17 und/oder weiterer Komponenten kann eine Steuerung 18 vorgesehen sein, die mit Signalleitern 23 mit den Komponenten verbunden ist. Zusätzlich kann die Steuerung 18 mit verschiedenen Sensoren und/oder übergeordneten Steuerungen (wie beispielsweise einer Motorsteuerung) verbunden sein, um bedarfsgerecht die Förderung bzw. Heizung anzustoßen. Die Steuerung 18 kann ebenfalls in die Kammer 9 integriert sein. Die mit der Fördereinheit 8 geförderte Flüssigkeit 2 wird über den Injektor 17 einer Abgasleitung 19 zugeführt, durch die Abgas mit einer vorgegebenen Strömungsrichtung 20 strömt. Dabei kann eine Verdampfung (z. B. eine Thermophorese) bzw. Umsetzung (z. B. eine Hydrolyse) der Flüssigkeit 2 hin zu einem Reduktionsmittel für Stickoxide erfolgen, gegebenenfalls unter Zuhilfenahme von katalytisch aktiven Substanzen. Dieses Gemisch aus Reduktionsmittel und Abgas kann dann einer Abgasbehandlungseinheit 21, insbesondere einem Katalysator, zugeführt werden, so dass die Stickoxide in der Abgasleitung 19 reduziert werden. Die Zugabe der Flüssigkeit 2 erfolgt dabei bevorzugt unter Berücksichtigung der in der Abgasleitung 19 benötigten Menge an Flüssigkeit 2.

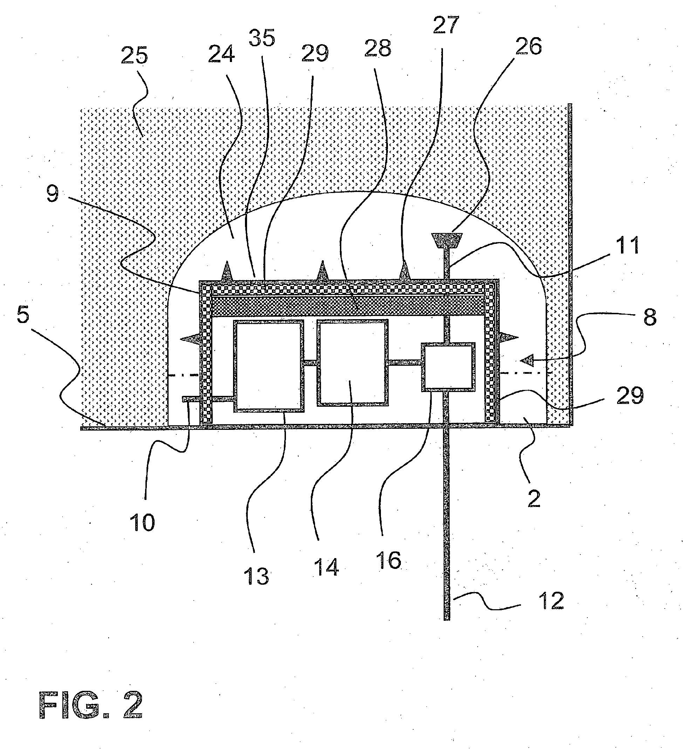

Fig. 2 zeigt ein Detail eines Tanks, wobei besonderer Fokus auf der Ausgestaltung der Kammer 9 gelegt ist. Dargestellt ist hierbei der Zustand des Tanks 1, bei dem die Flüssigkeit überwiegend gefroren und der Auftau-Prozess teilweise bereits erfolgt ist. Demnach wird um die Kammer 9 ein Raum 24 gebildet, der von der gefrorenen Flüssigkeit 25 umgeben ist. Das aufgetaute bzw. abgeschmolzene Teilvolumen der Flüssigkeit 2 sammelt sich nun in der Nähe des Tankbodens 5 um die Kammer 9 herum an. Hierbei ist nun die Kammer 9 so ausgebildet, dass der Ablauf 10 nahe des Tankbodens 5 angeordnet ist, also im Bereich der Flüssigkeit 2. Demgegenüber ist der Rücklauf 11 oberhalb der Flüssigkeit 2 angeordnet und weist hierbei zusätzlich einen Verteiler 26, beispielsweise nach Art einer Düse, auf. Das über den Rücklauf 11 abgegebene bereits erwärmte Teilvolumen der Flüssigkeit 2 benetzt nunmehr die Wandung des Raums 24 bzw. die Grenzfläche der gefrorenen Flüssigkeit 25 und verbessert somit die Wärmeabgabe hin zu der gefrorenen Flüssigkeit 25. Zudem sind an der Kammerwand Leitstrukturen 27 vorgesehen, mit denen das Abfließen von aufgetauter Flüssigkeit 2 über die Kammer 9 eingestellt werden kann.

Im Inneren der Kammer 9 ist neben den Komponenten zur Förderung der Flüssigkeit 2, nämlich Filter 13, Pumpe 14 und Ventil 16, eine Heizung 29 ausgebildet, die an den Wänden der Kammer 9 in wärmeleitendem Kontakt angeordnet sind. Bei dieser Heizung 29 handelt es sich bevorzugt um eine elektrische Heizung. Diese Heizung 29 kann bedarfsgerecht aktiviert werden und den Bereich um die Kammer 9 mit Wärme versorgen. Weiter ist hier veranschaulicht, dass für die Heizung 29 an der Kammeroberseite 35 eine hin zum Inneren der Kammer 9 gerichtete und die Heizung 29 überdeckende thermische Isolierung 28 vorgesehen ist, wobei dies in gleicher Weise auch hin zu den Kammerseitenwänden bzw. der dort angeordneten Heizung 29 möglich ist. Die thermische Isolierung 28 soll insbesondere bewirken, dass die Kammerwand von dem Inneren der Kammer 9, insbesondere den dort angeordneten Komponenten und/oder der darunter liegenden Grundplatte, thermisch entkoppelt ist. Dies führt dazu, dass die Leitungen mit Flüssigkeit im Inneren der Kammer 9 vorrangig einfrieren und der Bereich um die Kammer 9 herum im Tankinneren möglichst lange das Einfrieren der Flüssigkeit 2 verzögert.

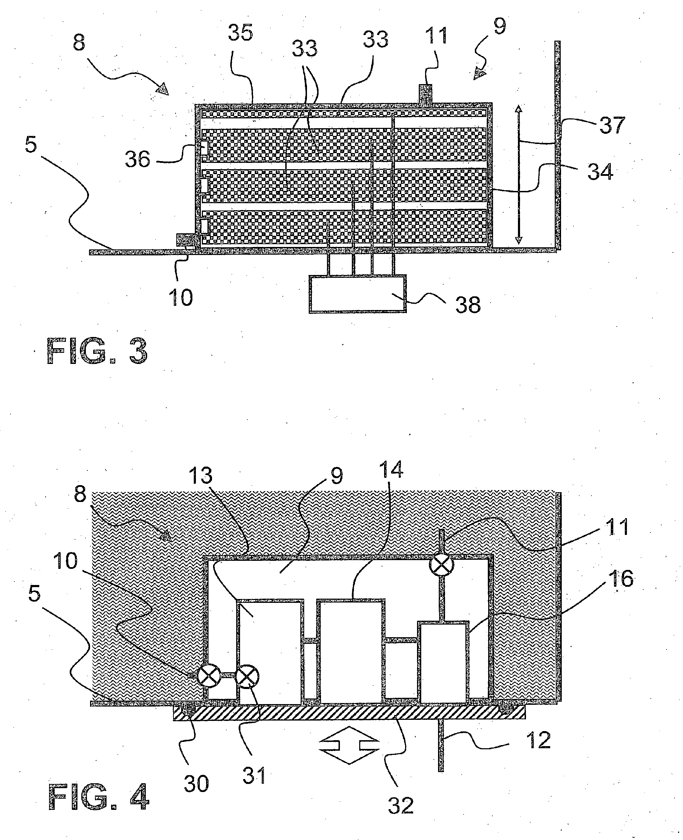

Fig. 3 veranschaulicht ohne eine Darstellung der Komponenten der Fördereinheit 8, wie die Heizung 29 an den Kammerwänden ausgeführt sein kann. Hierbei ist insbesondere dargestellt, dass die Heizung 29 mehrere Heizsegmente 33 (bzw. Heizelemente) aufweist, die parallel und/oder beabstandet zueinander über die Kammerhöhe 37 angeordnet sind. Dabei erstrecken sich hier drei Heizsegmente umlaufend entlang der Kammerseitenwand 34, und ein flächiges elektrisches Heizelement 33 ist an der Kammeroberseite 35 vorgesehen. Die drei über die Kammerhöhe 37 an der Kammerseitenwand 34 angeordneten Heizsegmente 33 sind als selbstregulierende Heizelemente ausgeführt, wobei diese gleichzeitig eingerichtet sind, als Füllstandsmesser zu fungieren. Zu diesem Zweck sind die Heizsegmente 33 nicht nur mit einer Steuerung sondern auch mit einer Stromversorgung 38 verbunden, so dass eine gezielte, bedarfsgerechte Stromversorgung bzw. Bestimmung des elektrischen Widerstands möglich ist. Zusätzlich können Schalter 36, insbesondere so genannte Thermoschalter, vorgesehen sein, um die Heizwirkung dieser Heizsegmente 33 zu begrenzen.

Fig. 4 soll veranschaulichen, wie eine solche Kammer 9 ausgebildet sein kann, damit eine besonders wartungsfreundliche Entnahme der Fördereinheit 8 während eines zumindest teilweise gefüllten Tanks ermöglicht ist. Zu diesem Zweck sind die Komponenten der Fördereinheit 8 auf einer (separaten, z. B. metallischen) Grundplatte 32 angeordnet. Die Grundplatte 32 ist über geeignete Dichtungen 30 mit dem Tankboden 5 (lösbar) verbunden. Die Kammerwände, die hier ein integraler Bestandteil des Tanks sind, kommunizieren mit dem Tankinneren über den Ablauf 10 und den Rücklauf 11. Bezüglich dieser beiden Flüssigkeitsleitungen sind hier separate Abflusssperren 31 vorgesehen, die bevorzugt bei einer Entnahme der Grundplatte 32 mit dem Filter 13, der Pumpe 14 und dem Ventil 16 automatisch schließen und damit ein Ausfließen der Flüssigkeit 2 über den Ablauf 10 und/oder den Rücklauf 11 unterbinden. Die Abflusssperren 31 können mechanisch oder elektrisch betrieben sein. Zusätzlich wird hier auch vorgeschlagen, ein entsprechendes Absperrmittel nahe des Filters 13 vorzusehen, um ein Ausströmen von im Filter 13 befindlichen Teilvolumen an Flüssigkeit zu vermeiden. Diese Abflusssperre 31 kann Teil des Filters oder der angrenzenden Flüssigkeitsleitung sein.

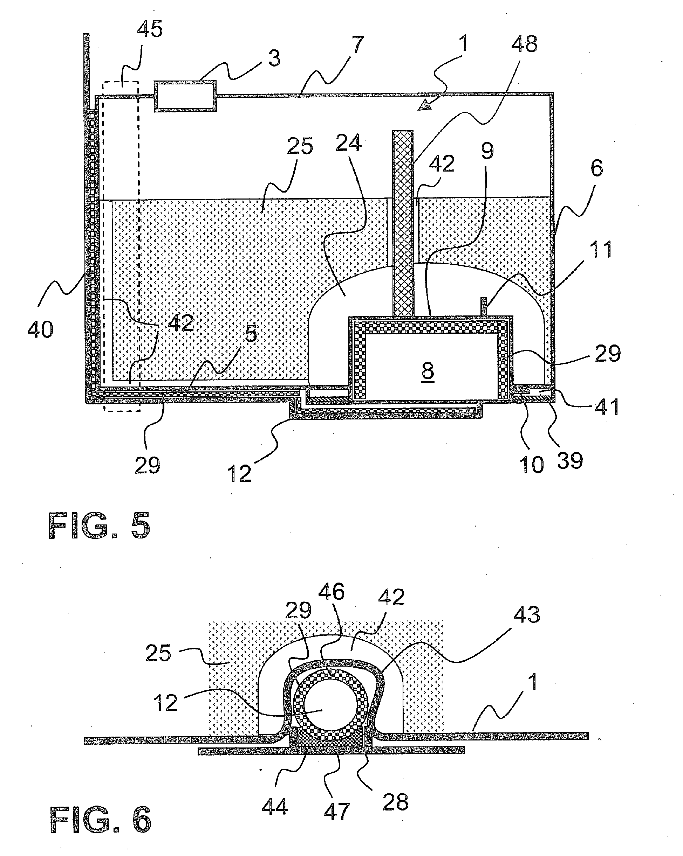

Fig. 5 veranschaulicht eine weitere Ausgestaltung eines Tanks 1 mit einer nahe des Tankbodens 5 angeordneten Kammer 9, in der eine Fördereinheit 8 angeordnet ist, wobei die Kammer 9 mit einer Heizung 29 ausgeführt ist. Wiederum ist hier dargestellt, dass sich im Inneren des Tanks 1 eine gefrorene Flüssigkeit 25 befindet, wobei diese teilweise durch die Heizung 29 der Kammer 9 aufgeschmolzen wurde. Als Besonderheit dieses Tanks 1 kann hier herausgestellt werden, dass um die Kammer 9 am Tankboden 5 herum eine Vertiefung 41 ausgebildet ist, die eine Art Sumpf für abgetaute Flüssigkeit darstellt. Diese Vertiefung 41 ist insofern insbesondere dazu geeignet, die bereits abgetaute bzw. abgeschmolzene Flüssigkeit über den Ablauf 10 abzusaugen. Um dabei die in der Kammer 9 mit der Heizung 29 erzeugte Wärme auch in diese Vertiefung 41 einzubringen, sind hier Wärmeleitmittel 39 vorgesehen, die sich bis in diese Vertiefung 41 oder andere Bereiche des Tankbodens 5 hinein erstrecken. Diese Wärmeleitmittel 39 können beispielsweise als metallische Stege, ein metallischer Ring und/oder eine metallische Hülse ausgebildet sein, die auf und/oder in den Tankboden 5 eingelassen sind. In diesem Ausführungsbeispiel sind die Wärmeleitmittel 39 Teil der Befestigung der Kammer 9.

Um zudem zu vermeiden, dass in dem durch den Abschmelzvorgang gebildeten Raum 24 ein Vakuum entsteht, weist dieser Tank 1 eine lokale Entlüftungsheizung 40 auf. Diese lokale Entlüftungsheizung erstreckt sich ausgehend von der Kammer 9 bzw. dem Tankboden nahe dem Ablauf 10 entlang des Tankbodens 5 und setzt sich dann entlang einer Tankseite 6 bis in die Nähe einer Tankdecke 7 fort. Diese hier linienförmig ausgeführte Entlüftungsheizung 40 ist mit der beheizten Injektionsleitung 12 ausgebildet. Die mit einer Heizung 29 versehene Injektionsleitung 12 verläuft dabei in Kontakt zur Tankwand, so dass durch die Wärmeeinbringung über die Heizung 29 und die Tankwand im Tankinneren ein gezielter Kanal 42 aufgeschmolzen wird, so dass der Raum 24 mit dem Raum nahe der Tankdecke 7 verbunden ist bzw. mit diesem Raum kommunizieren kann.

Zusätzlich ist in Fig. 5 noch eine weitere Ausführungsform einer Entlüftungsheizung 40 dargestellt. In Fig. 5 ist eine Tankbefestigung 45 für den Tank 1 angedeutet. Diese Tankbefestigung 45 kann gegebenenfalls beheizbar ausgeführt sein und so eine Entlüftungsheizung 40 bilden, die einen gezielten Kanal 42 freischmelzen kann. Gegebenenfalls kann eine Entlüftungsheizung 40 auch durch eine auf die Tankwand aufgedruckte (elektrisch beheizbare) Leiterbahn ausgebildet sein.

Als weitere Ausführungsform einer Entlüftungsheizung 40 ist in der Fig. 5 eine Antenne 48 auf der Kammer 9 abgebildet. Diese Antenne 48 erstreckt sich über die Höhe des Tanks 1 und kann zum Aufschmelzen eines gezielten Kanals 42 eine aktive Heizung aufweisen. Alternativ oder zusätzlich kann in der Antenne 48 auch ein Wärmerohr bzw. eine Heat-Pipe vorgesehen sein, das zur Ausbildung eines gezielten Kanals 42 Wärme von der Kammer 9 in die Antenne 48 transportiert.

Fig. 6 zeigt eine mögliche Ausgestaltung einer solchen Entlüftungsheizung 40 mit einer beheizten Injektionsleitung 12 im Querschnitt. Dazu ist der Tank 1 mit einer Führung 43 ausgebildet, in die beispielsweise die Injektionsleitung eingebracht bzw. sogar fixiert werden kann. Infolge der Wirkung der Heizung 29 um die Injektionsleitung 12 herum, wird der Kanal 42 im Inneren des Tanks 1 um die Führung 43 herum ausgebildet. Zudem ist hier vorgesehen, dass für eine gerichtete Wärmewirkung der Heizung 29 eine Isolierung 28 hin zur Außenseite des Tanks 1 angeordnet ist. So wird ein erster Teilbereich 46 der geheizten Injektionsleitung 12 gebildet, der am Tank 1 angeordnet ist und ein zweiter Teilbereich 47, der vom Tank 1 weg weist. Durch die thermische Isolierung 28 weist der zweite Teilbereich 47 einen Wärmedurchgangskoeffizienten auf, der kleiner ist als der Wärmedurchgangskoeffizient des ersten Teilbereichs 46. So wird erreicht, dass Wärme vermehrt in den Tank 1 und vermindert nach außerhalb abgeführt wird. Sofern die geheizte Injektionsleitung 12

Die thermische Isolierung 28 ist in eine Abdeckung 44 integriert, mit der die Führung 43 (lösbar) verschlossen werden kann. Dadurch wird so die Injektionsleitung 12 geschützt.

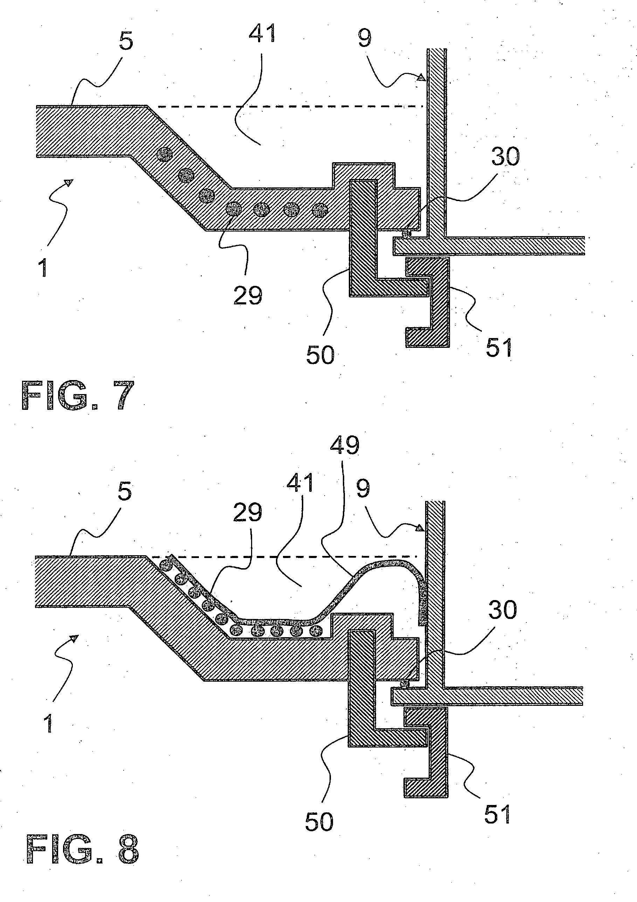

Die Fig. 7 und die Fig. 8 zeigen zwei verschiedene Details eines Tanks 1 einer erfindungsgemäßen Vorrichtung. Zu sehen jeweils ist ein Ausschnitt aus dem Tankboden 5 mit einer sumpfförmigen Vertiefung 41. In dieser Vertiefung 41 ist in eine Öffnung im Tankboden 5 von unten eine Kammer 9 eingesetzt. Die Kammer 9 ist mit einer Dichtung 30 gegen den Tankboden 5 abgedichtet. Die Dichtung 30 ist hier als O-Ring-Dichtung ausgeführt. Um den Tankboden 5, die Dichtung 30 und die Kammer 9 miteinander zu verspannen, ist in den Tankboden 5 ein Haltelement 50 eingelassen. Das Halteelement 50 kann in den Tankboden 5 beispielsweise eingegossen sein. An dem Halteelement 50 kann eine SAE-Verschraubung 51 zur Verspannung angreifen.

Gemäß der in der Fig. 7 dargestellten Ausgestaltung des Tanks 1 ist für die Vertiefung 41 eine Heizung 29 durch in den Tankboden 5 eingelassene Heizleiter realisiert. Die Heizleiter können beispielsweise ein Drahtgewebe oder Blechstreifen sein. Gemäß der in der Fig. 8 gewählten Ausgestaltung des Tanks 1 ist für die Vertiefung 41 eine Heizung 29 von der Innenseite des Tankbodens 5 her gegen die Tankwand 5 gepresst. Die Heizung 29 kann auch hier als Drahtgewebe oder als Blechstreifen ausgeführt sein. Die Heizung 29 kann mit einer Klammer 49 gegen den Tankboden 5 gepresst sein. Die Klammer 49 bzw. die Heizung 29 können an der Kammer 9 befestigt sein. Vorzugsweise sind die Heizung 29 und die Klammer 49 so ausgeführt, dass sie zusammen mit der Kammer 9 in die Öffnung im Tankboden 5 eingesetzt werden können, ohne dass hierzu eine Montage innerhalb des Tanks 1 erforderlich ist.

Der Vollständigkeit halber sei darauf hingewiesen, dass die in den Figuren einzeln dargestellten Ausprägungen der Kammer 9, der Heizung 29, der Entlüftungsheizung 40 und der Abflusssperren 31 separat eine vorteilhafte Weiterbildung zum bekannten Stand der Technik sind, die gegebenenfalls auch unabhängig voneinander verwirklicht werden können.

### Bezugszeichenliste

- 1: Tank
- 2: Flüssigkeit
- 3: Füllöffnung
- 4: Füllstandsmesser
- 5: Tankboden
- 6: Tankseite
- 7: Tankdecke
- 8: Fördereinheit
- 9: Kammer
- 10: Ablauf
- 11: Rücklauf
- 12: Injektionsleitung
- 13: Filter
- 14: Pumpe
- 15: Sensor
- 16: Ventil
- 17: Injektor
- 18: Steuerung
- 19: Abgasleitung
- 20: Strömungsrichtung
- 21: Abgasbehandlungseinheit
- 22: Kraftfahrzeug
- 23: Signalleiter
- 24: Raum
- 25: gefrorene Flüssigkeit
- 26: Verteiler
- 27: Leitstruktur
- 28: Isolierung
- 29: Heizung
- 30: Dichtung
- 31: Abflusssperre
- 32: Grundplatte
- 33: Heizsegment
- 34: Kammerseitenwand
- 35: Kammeroberseite
- 36: Schalter
- 37: Kammerhöhe
- 38: Stromversorgung
- 39: Wärmeleitmittel
- 40: Entlüftungsheizung
- 41: Vertiefung
- 42: Kanal
- 43: Führung
- 44: Abdeckung
- 45: Tankbefestigung
- 46: erster Teilbereich
- 47: zweiter Teilbereich
- 48: Antenne
- 49: Klammer
- 50: Halteelement
- 51: SAE-Verschluss

## Patentansprüche

1. Vorrichtung, umfassend zumindest einen Tank (1) mit einem Tankboden (5) und eine Fördereinheit (8) für eine Flüssigkeit (2), wobei die Fördereinheit (8) in einer Kammer (9) am Tankboden (5) angeordnet ist, und die Kammer (9) zumindest eine Heizung (29) aufweist, **dadurch gekennzeichnet dass** die Heizung (29) mit mindestens einem elektrischen Heizsegment (33) ausgeführt ist, das in wärmeleitenden Kontakt zumindest zur Kammerseitenwand (34) oder zur Kammeroberseite (35) angeordnet ist und mehrere Heizsegmente (33) in Richtung einer Kammerhöhe (37) der Kammer (9) vorgesehen sind.

2. Vorrichtung nach einem der vorhergehenden Patentansprüche, bei der eine Isolierung (28) zumindest im Bereich einer Kammeroberseite (35) der Kammer (9) vorgesehen ist.

3. Vorrichtung nach einem der vorhergehenden Patentansprüche, bei der die Heizung (29) zumindest ein selbstregulierendes Heizsegment (33) umfasst.

4. Vorrichtung nach einem der vorhergehenden Patentansprüche, bei der die zumindest eine Heizung (29) als Füllstandsmesser (4) eingerichtet ist.

5. Vorrichtung nach einem der vorhergehenden Patentansprüche, bei der am Tankboden (5) nahe der Kammer (9) mindestens ein Wärmeleitmittel (39) angeordnet ist.

6. Vorrichtung nach Patentanspruch 5, bei der das Wärmeleitmittel (39) der Befestigung der Kammer (9) dient.

7. Vorrichtung nach einem der vorhergehenden Patentansprüche, bei der ein Ablauf (10) für Flüssigkeit (2) aus dem Tank (1) in die Kammer (9) und ein Rücklauf (11) für Flüssigkeit (2) aus der Kammer (9) in den Tank (1) vorgesehen sind, wobei Ablauf (10) und Rücklauf (11) an verschiedenen Positionen der Kammer (9) angeordnet sind.

8. Vorrichtung nach Patentanspruch 7, bei der zumindest der Ablauf (10) oder der Rücklauf (11) eine Abflusssperre (31) aufweist.

9. Vorrichtung nach Patentanspruch 7 oder 8, bei der Ablauf (10) nahe des Tankbodens (5) angeordnet ist, während der Rücklauf (11) auf der Kammeroberseite (35) der Kammer (9) angeordnet ist

## Claims

1. Apparatus comprising at least one tank (1) having a tank bottom (5) and a delivery unit (8) for a liquid (2), wherein the delivery unit (8) is arranged in a chamber (9) on the tank bottom (5) and the chamber (9) has at least one heater (29), **characterized in that** the heater (29) is embodied with at least one electrical heating segment (33) which is arranged in heat-conducting contact at least with the chamber side wall (34) or with the chamber top side (35) and a plurality of heating segments (33) are provided in the direction of a height (37) of the chamber (9).

2. Apparatus according to Claim 1, in which insulation (28) is provided at least in the region of a top side (35) of the chamber (9).

3. Apparatus according to one of the preceding claims, in which the heater (29) comprises at least one self-regulating heating segment (33).

4. Apparatus according to one of the preceding claims, in which the at least one heater (29) is designed as a filling level gauge (4).

5. Apparatus according to one of the preceding claims, in which at least one heat-conducting means (39) is arranged on the tank bottom (5), close to the chamber (9).

6. Apparatus according to Claim 5, in which the heat-conducting means (39) serves to fasten the chamber (9).

7. Apparatus according to one of the preceding claims, in which a discharge line (10) for liquid (2) from the tank (10) into the chamber (9) and a return line (11) for liquid (2) from the chamber (9) into the tank (1) are provided, wherein the discharge line (10) and return line (11) are arranged at different positions in the chamber (9).

8. Apparatus according to Claim 7, in which at least the discharge line (10) or the return line (11) has a drain block (31).

9. Apparatus according to Claim 7 or 8, in which discharge line (10) is arranged close to the tank bottom (5) while the return line (11) is arranged on the chamber top side (35) of the chamber (9).

## Revendications

1. Dispositif, comprenant au moins un réservoir (1) ayant un fond (5) et une unité (8) d'acheminement d'un liquide (2), l'unité (8) d'acheminement étant disposée dans une chambre (9) sur le fond (5) du réservoir et la chambre (9) ayant au moins un chauffage (29), **caractérisé en ce que** le chauffage (29) est réalisé en ayant au moins un segment (33) de chauffage électrique, qui est disposé en contact de conduction de la chaleur au moins avec la paroi (34) latérale de la chambre ou le côté (35) supérieur de la chambre, et il est prévu plusieurs segments (33) de chauffage dans la direction d'une hauteur (37) de la chambre (9).

2. Dispositif suivant l'une des revendications précédentes, dans lequel il est prévu une isolation (28), au moins dans la zone d'un côté (35) supérieur de la chambre (9).

3. Dispositif suivant l'une des revendications précédentes, dans lequel le chauffage (29) comprend au moins un segment (33) de chauffage à autorégulation.

4. Dispositif suivant l'une des revendications précédentes, dans lequel le au moins un chauffage (29) est agencé sous la forme d'un dispositif (4) de mesure de niveau.

5. Dispositif suivant l'une des revendications précédentes, dans lequel au moins un moyen (39) de conduction de la chaleur est disposé au fond (5) du réservoir près de la chambre (9).

6. Dispositif suivant la revendication 5, dans lequel le moyen (39) de conduction de la chaleur sert à la fixation de la chambre (9).

7. Dispositif suivant l'une des revendications précédentes, dans lequel il est prévu une évacuation (10) du liquide (2) du réservoir (1) dans la chambre (9) et un retour (11) du liquide (2) de la chambre (9) au réservoir (1), l'évacuation (10) et le retour (11) étant disposés en des positions différentes de la chambre (9).

8. Dispositif suivant la revendication 7, dans lequel au moins l'évacuation (10) ou le retour (11) à un arrêt (31) s'opposant à l'écoulement.

9. Dispositif suivant la revendication 7 ou 8, dans lequel l'évacuation (10) est disposé près du fond (5) du réservoir, tandis que le retour (11) est disposé sur le côté (35) supérieur de la chambre (9).
